Europäisches Patentamt

European Patent Office

Office européen des brevets

(11) Publication number: **0 187 435**
**B1**

# EUROPEAN PATENT SPECIFICATION

(45) Date of publication of patent specification: **15.03.89**

(21) Application number: **85305015.1**

(22) Date of filing: **12.07.85**

(51) Int. Cl.⁴: **A 01 D 34/74,** A 01 D 34/84, A 01 D 34/73, A 01 D 55/00

(54) **Lawnmower.**

(30) Priority: **20.12.84 JP 268860/84**

(43) Date of publication of application:
**16.07.86 Bulletin 86/29**

(45) Publication of the grant of the patent:
**15.03.89 Bulletin 89/11**

(84) Designated Contracting States:
**BE DE GB IT NL SE**

(56) References cited:
**DE-A-3 016 286**
**US-A-2 915 318**
**US-A-3 000 647**
**US-A-3 514 126**
**US-A-3 568 421**
**US-A-4 236 310**

(73) Proprietor: **KIORITZ CORPORATION**
**5-1, Shimorenjaku 7-Chome**
**Mitaka-Shi Tokyo (JP)**

(72) Inventor: **Nogawa, Masato c/o Oppama Kogyo K.K.**
**114 Oppamahoncho 1-chome**
**Yokosuka-Shi Kanagawa-Ken (JP)**

(74) Representative: **Leale, Robin George et al**
**FRANK B. DEHN & CO. Imperial House 15-19 Kingsway**
**London WC2B 6UZ (GB)**

Courier Press, Leamington Spa, England.

## Description

This invention relates to lawnmowers and in particular to a device for converting a powered weedcutter to a lawnmower, and to a lawnmower comprising such a conversion.

Viewed from one aspect the invention provides, for use with a portable powered weedcutter having a long operating shaft with a motor at one end and a rotary cutting blade at the other end, said cutting blade being driven by the motor by means of a driving shaft extending through the operating shaft and being arranged to rotate in a horizontal plane in use, a device for converting the weedcutter to a lawnmower, such device comprising: a housing mountable to the said other end of the weedcutter to enclose the upper part of the said cutting blade, a grass discharge port in said housing, and a pair of front wheels mounted on said housing so as to be vertically adjustable relative thereto for setting the depth of cut. Thus in this aspect the invention provides means for converting a powered weedcutter to a lawnmower.

Viewed from another aspect the invention provides a lawnmower comprising a portable powered weedcutter having a long operating shaft with a motor at one end and a rotary cutting blade at the other end, said cutting blade being driven by the motor by means of a driving shaft extending through the operating shaft and being arranged to rotate in a horizontal plane in use, characterised in that the lawnmower further includes a detachable device comprising a housing detachably mounted to the said other end of the weedcutter to enclose the upper part of the said cutting blade, a grass discharge port in said housing, and a pair of front wheels mounted on said housing so as to be vertically adjustable relative thereto for setting the depth of cut. Thus in this aspect the invention provides a lawnmower which is convertible to a powered weedcutter, by removing the said detachable device.

Preferably the said housing has a central aperture adapted to fit around, and be secured to, a casing containing bearings of the final drive shaft of the rotary cutter.

Preferably each of the said wheels is mounted at one end of a respective bell-crank lever pivotally mounted on a common axis on the said housing, the other ends of the said levers being connected to the opposite ends of a common transverse shaft which is positionally adjustable laterally of its axis to rotate the said bell-crank levers and thereby vertically adjust the wheels. The apparatus may then include spring-operated detent means on the housing for holding the said transverse shaft in any desired one of a plurality of positions of adjustment.

An embodiment of the invention will now be described by way of example and with reference to the accompanying drawings, in which:

Fig. 1 is a side elevation view of an apparatus according to the invention;

Fig. 2 is a plan view of the cutting assembly of the apparatus;

Fig. 3 is a vertical longitudinal axial sectional view of such cutting assembly;

Fig. 4 is a sectional view of part of a mechanism for setting the depth of cut;

Fig. 5 is a vertical sectional view of a gear and bearing assembly of the apparatus;

Fig. 6 is an external perspective view of the cutting assembly; and

Fig. 7 is a diagrammatic view to illustrate the positional relationship between the wheels and the cutting blade.

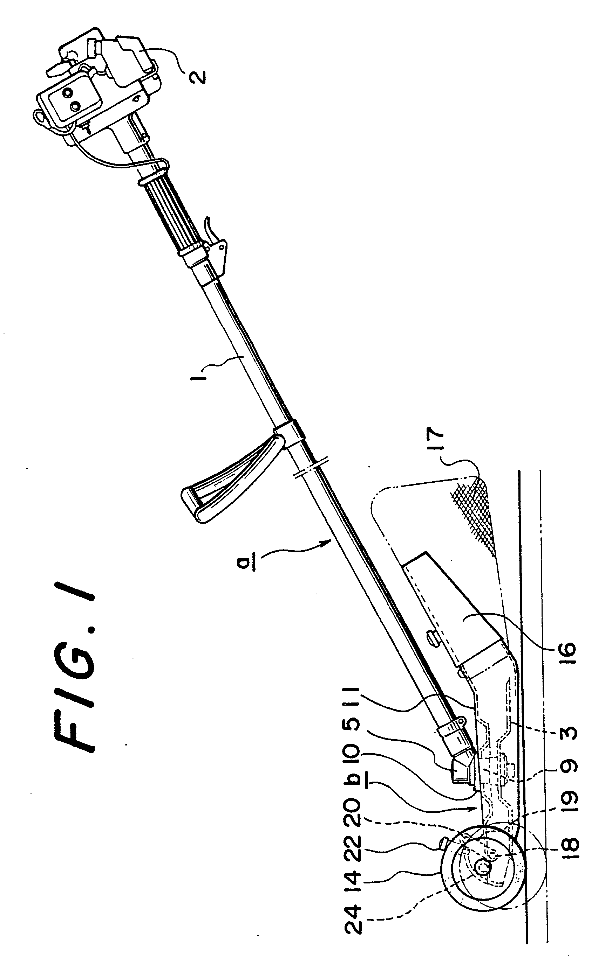

In Fig. 1, showing a general view, a weed cutter a comprises an operating shaft 1 of a suitable length, a motor 2 provided at the top end of the shaft and a cutting blade 3 rotatable horizontally at the bottom end thereof.

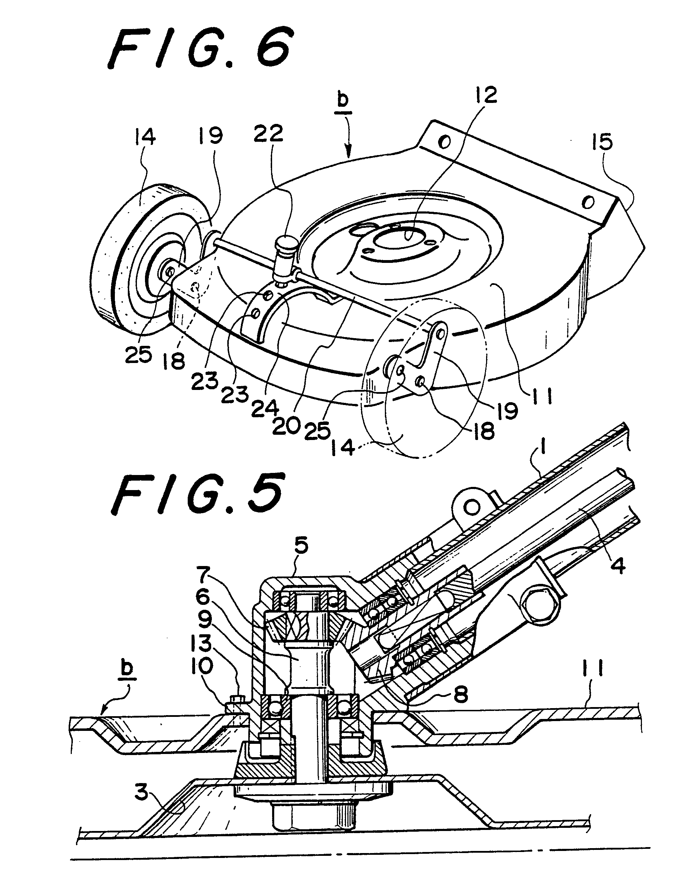

A driving shaft 4 extends through the operating shaft 1 from the motor 2, and a bearing and gear casing 5 is provided at the bottom end. As shown in Fig. 5, a final drive shaft 6 for the cutting blade 3 is mounted within the casing 5. A bevel gear 7 provided at the upper end of the shaft 6 and a bevel gear 8 provided at the lower end of the driving shaft 4 mesh with each other so that the cutting blade 3 may be rotated by the motor 2. The thus constructed portable weedcutter is suspended and supported from a shoulder strap (not illustrated) secured to the operating shaft 1, and the operating shaft is swung to right and left by the operator to cut weeds.

Referring again to Fig. 5, reference numeral 9 indicates a lower bearing for the final drive shaft 6 of the cutting blade 3. A flange 10 mounts a housing 11 of a device b for converting the weedcutter to a lawnmower. The purpose of the housing 11 is to prevent grass cuttings or extraneous matter such as abandoned vinyl sheets from being entangled with the shaft 6. A cover (not illustrated) to prevent cut weeds from flying towards the operator may be provided on the lower part of the outside of the gear casing 5, and this cover may be replaced by the housing 11.

In the present apparatus, the flange 10 is utilized to fit the conversion device b.

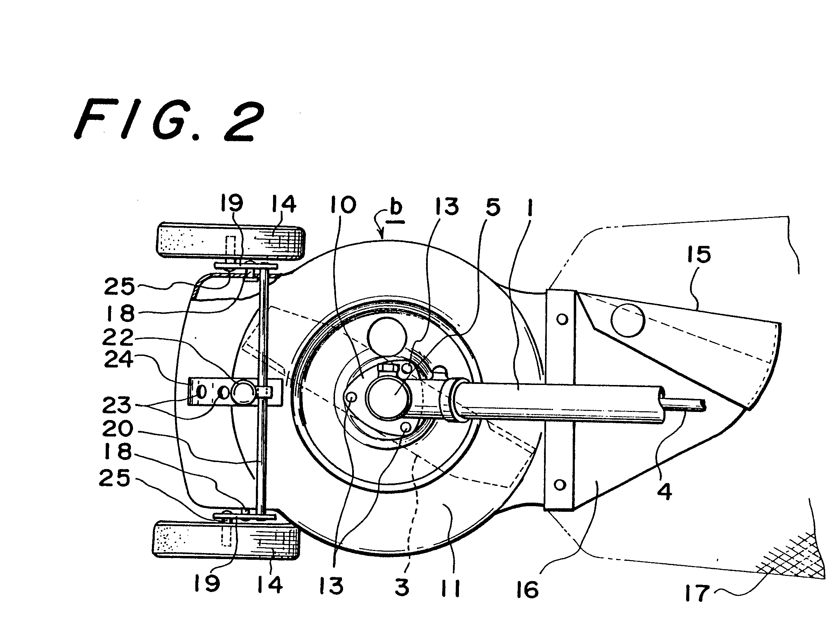

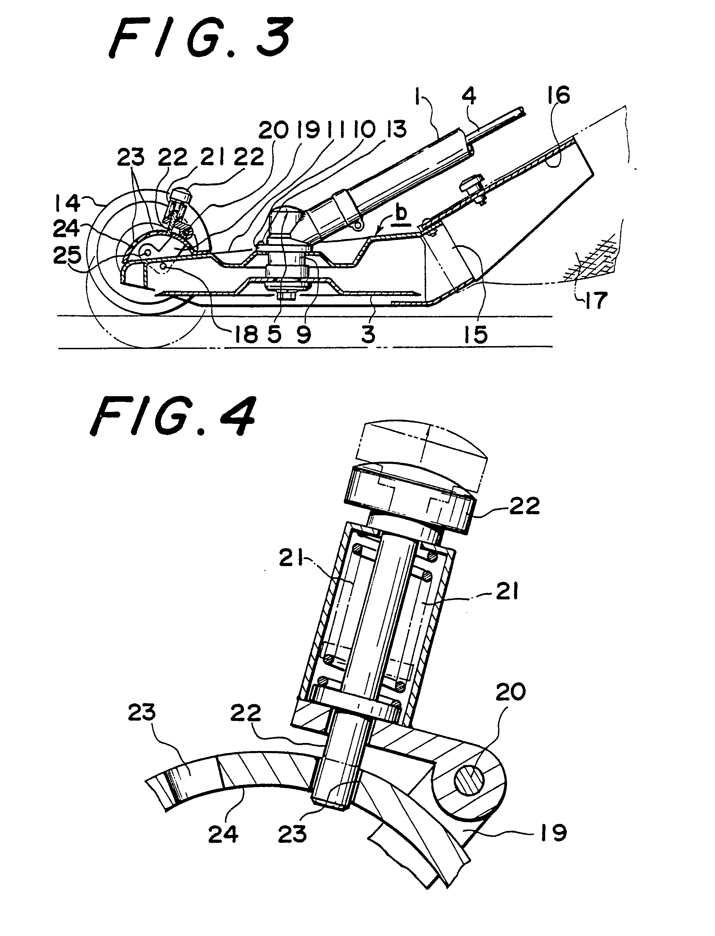

As shown particularly in Fig. 6, the conversion device b comprises a main body provided by the housing 11 which encloses the upper part of the cutting blade 3 and is formed with a central hole 12 fitting around the casing 5 in the vicinity of the bearing 9. As shown in Figs. 1, 2, 3 and 5, the housing 11 is secured to the casing 5 by threaded bolts 13 screwed into the flange 10.

The device b further comprises a pair of vertically adjustable front wheels 14, and a grass discharge port 15 at the rear thereof. Reference numeral 16 indicates a guide duct connected to the discharge port 15, and 17 is a grass collecting bag.

Referring now particularly to the wheels 14, these are made vertically adjustable relative to the housing 11 so that the depth of cut may be adjusted. Thus a bell-crank lever 19 is pivotally mounted on a supporting shaft 18 on each side of the front part of the housing 11 and the wheels 14 are mounted on axles 25 at the forward ends of the respective levers 19. The levers 19 are interconnected at their rear ends by a transverse shaft 20. When the shaft 20 is moved forward or rearward i.e. laterally relative to its axis, the wheels 14 will be moved vertically and can thereby be set in predetermined positions to adjust the depth of cut.

To secure the shaft 20 in a desired position, a locking pin 22 biassed by a spring 21 is mounted in a suitable position on the shaft 20, and a locking bar 24 having a suitable number of holes 23 to receive the locking pin 22 is provided on the housing 11 so that, by inserting the locking pin 22 in one of the holes 23, the shaft 20 may be secured in a desired position to set the height of the wheels 14.

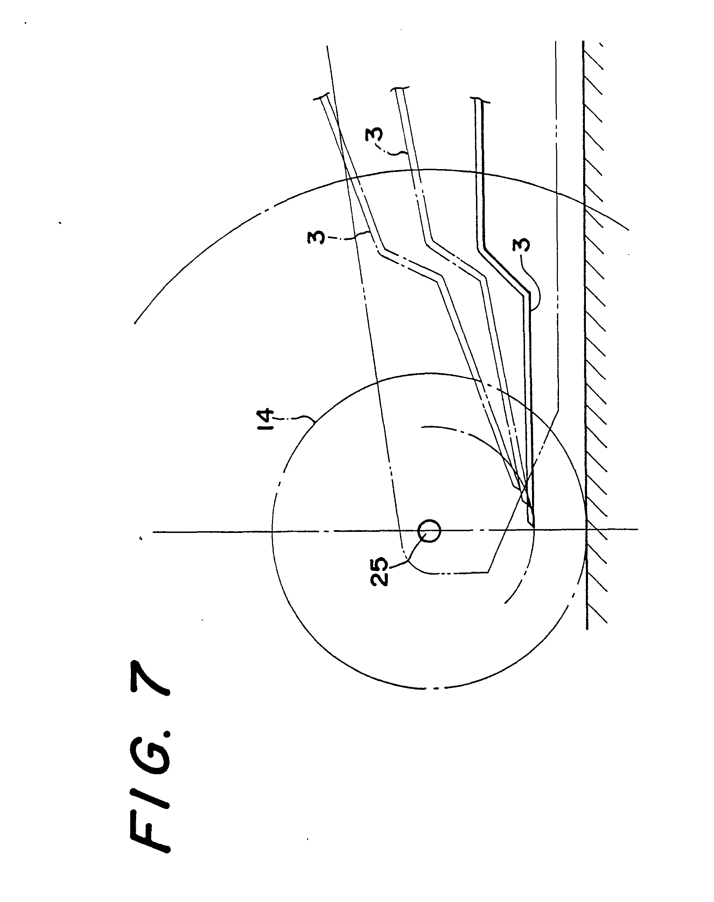

Preferably the cutting edge of the cutting blade 3 is so positioned that, as shown in Fig. 7, it is substantially vertically aligned with the axles 25 of the wheels 14, so that irrespective of the vertical movement of the operating shaft 1, the consequent movement of the cutting edge of the blade will be so small that fluctuation of the depth of cut will be minimal.

It will thus be seen that, at least in its preferred forms, the invention provides simple, inexpensive and efficient means for converting a powered weedcutter to a small lightweight, easily operable lawnmower, provided with simple but effective means for adjusting the depth of cut, and which can also of course be used as a weedcutter when desired, by removing the conversion device. The two-wheeled arrangement also makes the lawnmower particularly easy to manoeuver.

**Claims**

1. For use with a portable powered weedcutter (a) having a long operating shaft (1) with a motor (2) at one end and a rotary cutting blade (3) at the other end, said cutting blade being driven by the motor by means of a driving shaft (4) extending through the operating shaft and being arranged to rotate in a horizontal plane in use, a device (b) for converting the weedcutter to a lawnmower, such device comprising: a housing (11) mountable to the said other end of the weedcutter to enclose the upper part of the said cutting blade, a grass discharge port (15) in said housing, and a pair of front wheels (14) mounted on said housing so as to be vertically adjustable relative thereto for setting the depth of cut.

2. A lawnmower comprising a portable powered weedcutter (a) having a long operating shaft (1) with a motor (2) at one end and a rotary cutting blade (3) at the other end, said cutting blade being driven by the motor by means of a driving shaft (4) extending through the operating shaft and being arranged to rotate in a horizontal plane in use, characterised in that the lawnmower further includes a detachable device (b) comprising a housing (11) detachably mounted to the said other end of the weedcutter to enclose the upper part of the said cutting blade, a grass discharge port (15) in said housing, and a pair of front wheels (14) mounted on said housing so as to be vertically adjustable relative thereto for setting the depth of cut.

3. Apparatus as claimed in claim 1 or 2, further characterised in that said housing (11) has a central aperture (12) adapted to fit around, and be secured to, a casing (5) containing bearings (9) of the final drive shaft (6) of the rotary cutter (3).

4. Apparatus as claimed in any of claims 1 to 3, further characterised in that each of the said wheels (14) is mounted at one end of a respective bell-crank lever (19) pivotally mounted on a common axis (18) on the said housing, the other ends of the said levers being connected to the opposite ends of a common transverse shaft (20) which is positionally adjustable laterally of its axis to rotate the said bell-crank levers and thereby vertically adjust the wheels.

5. Apparatus as claimed in claim 4, further including spring-operated detent means (22) on the housing (11) for holding the said transverse shaft (20) in any desired one of a plurality of positions of adjustment.

**Patentansprüche**

1. Zur Verwendung mit einem tragbaren, angetriebenen Unkrautschneider (a), der einen langen Bedienungsschaft (1) mit einem Motor (2) an einem Ende und einem rotierenden Schneidmesser (3) am anderen Ende hat, wobei das Schneidmesser durch den Motor mit Hilfe einer Antriebswelle (4) angetrieben ist, die durch den Bedienungsschaft geht und derart angeordnet ist, daß es sich im Gebrauchszustand in einer horizontalen Ebene dreht, bestimmte Vorrichtung (b) zum Umwandeln des Unkrautschneiders in einen Rasenmäher, wobei die Einrichtung aufweist: ein Gehäuse (11), das an dem anderen Ende des Unkrautschneiders anbringbar ist, um den oberen Teil des Schneidmessers zu umgeben, eine Grasaustrittsöffnung (15) in dem Gehäuse, und ein Paar von Vorderrädern (14), die am Gehäuse derart angebracht sind, daß sie relativ zu diesem zum Einstellen der Schnittiefe vertikal verstellbar sind.

2. Rasenmäher, der einen tragbaren, angetriebenen Unkrautschneider (a) aufweist, der einen langen Bedienungsschaft (1) mit einem Motor (2) an einem Ende und einem rotierenden Schneidmesser (3) am anderen Ende hat, wobei das Schneidmesser durch den Motor über eine Antriebseinrichtung (4) angetrieben ist, die durch den Bedienungsschaft geht und derart angeordnet ist, daß es sich im Gebrauchszustand in einer horizontalen Ebene dreht, dadurch gekennzeichnet, daß der Rasenmäher ferner eine abnehmbare Einrichtung (b) enthält, die ein Gehäuse (11) aufweist, das lösbar an dem anderen Ende des Unkrautschneiders so angebracht ist, daß das obere Teil des Schneidmessers umgeben ist, eine Grasaustrittsöffnung (15) in dem Gehäuse und ein Paar Vorderrädern (14) aufweist, die an dem Gehäuse derart angebracht sind, daß sie zur Einstellung der Schnittiefe relativ zu diesem verstellbar sind.

3. Vorrichtung nach Anspruch 1 oder 2, ferner dadurch gekennzeichnet, daß das Gehäuse (11) eine Mittelöffnung (12) hat, die derart ausgelegt ist, daß sie um ein Gehäuse (5) paßt und mit diesem verbindbar ist, das Lager (9) der Endantriebswelle (6) des Drehschneiders (3) enthält.

4. Vorrichtung nach einem der Ansprüche 1 bis 3, ferner dadurch gekennzeichnet, daß jedes Rad (14) an einem Ende eines zugeordneten krummen Hebels (19) angebracht ist, der schwenkbeweglich an einer gemeinsamen Achse (18) am Gehäuse gelagert ist, und daß die anderen Enden der Hebel mit den gegenüberliegenden Enden einer gemeinsamen Querachse (20) verbunden sind, die in Querrichtung zur Achse hinsichtlich der Lage verstellbar ist, um die krummen Hebel zu drehen und hierdurch die Räder in vertikaler Richtung einzustellen.

5. Vorrichtung nach Anspruch 4, die ferner eine federbelastete Rasteinrichtung (22) am Gehäuse (11) enthält, welche die Querachse (20) in jeder gewünschten Position einer Mehrzahl von einstellbaren Positionen hält.

**Revendications**

1. A utiliser avec un sarcloir à moteur, portatif, (a), comportant un long manche de manoeuvre (1), avec un moteur (2) à une extrémité et une lame rotative tranchante (3) à son autre extrémité, la lame tranchante étant entraînée par le moteur au moyen d'un arbre d'entraînement (4) s'étendant à travers le manche de manoeuvre, et étant agencée pour tourner dans un plan horizontal en cours d'emploi, un dispositif (b) pour transformer un sarcloir en une tondeuse à gazon, ce dispositif comprenant un carter (11) pouvant être monté sur ladite autre extrémité du sarcloir pour enfermer la partie supérieure de la lame tranchante, un passage (15) dans le carter pour la décharge de l'herbe et une paire de roues avant (14) montées sur le carter de façon à être ajustables verticalement par rapport à celui-ci pour fixer la profondeur de coupe.

2. Tondeuse à gazon comprenant un sarcloir à moteur, portatif, (a), comportant un long manche de manoeuvre (1), avec un moteur (2) à une extrémité et une lame rotative tranchante (3) à son autre extrémité, la lame tranchante étant entraînée par le moteur au moyen d'un arbre d'entraînement (4) s'étendant à travers le manche de manoeuvre, et étant agencée pour tourner dans un plan horizontal en cours d'emploi, caractérisée en ce que la tondeuse à gazon comprend en outre un dispositif amovible (b) comprenant un carter (11) monté de manière amovible à l'autre extrémité du sarcloir pour enfermer la partie supérieure de la lame tranchante, un passage (15) dans le carter pour la décharge de l'herbe et une paire de roues avant (14) montées sur le carter de façon à être ajustables verticalement par rapport à celui-ci pour fixer la profondeur de coupe.

3. Appareil suivant la revendication 1 ou la revendication 2, caractérisé en outre en ce que le carter (11) comporte une ouverture centrale (12) propre à s'adapter autour d'un boîtier (5) et fixée à ce boîtier (5), lequel contient les roulements (9) de l'arbre d'entraînement final (6) de la lame tranchante rotative (3).

4. Appareil suivant l'une quelconque des revendications 1 à 3, caractérisé en outre en ce que chacune desdites roues (14) est montée à une extrémité d'un levier en forme de manivelle (19) respectif, monté à pivotement sur un axe commun (18) du carter, les autres extrémités desdits leviers étant reliées aux extrémités opposées d'un arbre transversal commun (20) qui est ajustable en position latéralement par rapport à l'axe pour faire tourner les leviers en forme de manivelles et ainsi ajuster verticalement les roues.

5. Appareil suivant la revendication 4, comprenant en outre des moyens d'arrêt provisoire (22) actionnés par ressort, sur le carter (11), pour maintenir l'arbre transversal (20) en une position voulue quelconque de plusieurs positions d'ajustement.

# FIG. 1

24 14 22 20 b 10 5 11

a

1

2

17

16

18 19 9 3

EP 0 187 435 B1

FIG. 2

# FIG. 3

# FIG. 4

# FIG. 6

# FIG. 5

4

FIG. 7